# EUROPÄISCHE PATENTSCHRIFT

(11) **EP 2 369 207 B1**
(45) Veröffentlichungstag und Bekanntmachung des Hinweises auf die Patenterteilung: **27.08.2014**
(21) Anmeldenummer: 10405045.5
(22) Anmeldetag: 09.03.2010
(51) Int. Cl.: F16K 1/10, F16K 15/18

(54) **Ventil**
Valve
Soupape

(43) Veröffentlichungstag der Anmeldung: 28.09.2011
(73) Patentinhaber: R. Nussbaum AG, 4601 Olten (CH)
(72) Erfinder: Schindler, Peter, 9043 Trogen (CH); Billeter, Lukas, 4800 Zofingen (CH); Gysin, Kurt, 4446 Buckten (CH); Schreiber, Lukas, 4600 Olten (CH); Bobst, Urs, 4703 Kestenholz (CH); Zeiter, Patrick, 4853 Riken (CH)
(74) Vertreter: Rüfenacht, Philipp Michael

(56) Entgegenhaltungen:
- WO-A1-2007/098562
- WO-A1-2009/031994
- DE-A1- 3 015 487
- DE-A1- 3 314 860
- DE-A1- 3 610 884
- DE-C1- 19 833 679

## Beschreibung

### Technisches Gebiet

Die Erfindung betrifft ein Ventil, insbesondere mit integriertem Rückflussverhinderer.

### Stand der Technik

Ein Ventil mit Rückflussverhinderer umfasst in der Regel einen Schliesskörper in der Form eines Ventiltellers, welcher entlang einer Spindelachse einer Spindel in einen Ventilsitz verschoben werden kann. Im Unterschied zu einem normalen Absperrventil ist der Ventilteller bzw. die Spindel nicht fest mit einem Stellrad verbunden, sondern ist in einer Führungsbuchse frei vom Stellrad verschiebbar, wobei die Führungsbuchse ihrerseits fest mit dem Stellrad verbunden ist. Bei geschlossenem Ventil drückt das Stellrad via die Führungsbuchse und der Spindel den Ventilteller in den Ventilsitz. In offener Ventilstellung wird der Ventilteller durch ein elastisches Element, in der Regel eine Druckfeder, in den Ventilsitz gedrückt. Wird der Federdruck aber durch den Druck eines Fluids überwunden, wird das Ventil geöffnet und das Fluid kann in eine gewünschte Richtung durch das Ventil fliessen. Ein Fluss des Fluids in eine Gegenrichtung wird verunmöglicht, indem bei Gegendruck der Ventilteller durch die Druckfeder (und zusätzlich durch den Fluiddruck) in den Ventilsitz gepresst wird.

An die Rückflussverhinderung sind verschiedene Anforderungen gestellt: die Ventile müssen bei verhältnismässigen hohen Gegendrücken sicher abdichten, bereits bei kleinem Gegendruck rechtzeitig schliessen, damit der Rückfluss verhindert ist, und dem durchfliessendem Fluid einen möglichst geringen Widerstand entgegensetzen. Zudem sollte der Überdruck, welchen das Fluid aufbringen muss, damit das Ventil für den Durchfluss in die erlaubte Richtung geöffnet wird, gering sein. Das heisst, das Ventil mit Rückflussverhinderer sollte eine grosse Ansprechempfindlichkeit aufweisen.

Im Unterschied zu reinen Rückflussverhinderern, welche lediglich die Kräfte, die durch den Gegendruck entstehen, aufnehmen müssen, entstehen bei Ventilen mit Rückflussverhinderer zusätzlich beim vollständigen Schliessen noch Schliesskräfte. Durch die Anforderungen, einerseits eine hohe Ansprechempfindlichkeit aufzuweisen und andererseits grosse Schliessdrücke aufzunehmen, kommt der Dichtung zwischen dem Ventilteller und dem Ventilsitz eine grosse Bedeutung zu, weil die Dichtung einen Erstkontakt des Ventiltellers mit dem Ventilsitz herstellt und damit die Ansprechempfindlichkeit wesentlich beeinflusst.

Die DE 33 14 860 A1 (Hansa Metallwerke AG) beschreibt ein kombiniertes Rückschlag- und Vorabsperrventil zum Einbau in eine Sanitärarmatur bestehend aus einer inneren Büchse und einer äusseren Büchse, welche in ihrem Zwischenraum ein ringförmig ausgestaltetes Verschlussglied für das Rückschlagventil enthalten. Letzteres ist am äusseren Umfang als elastische Dichtung ausgebildet und liegt bei geschlossenem Ventil an einer Sitzfläche der inneren Büchse auf. Das Verschlussglied enthält ferner eine weitere Ringdichtung welche den Anschlag gegenüber der inneren Büchse abfedert und in geschlossenem Ventilzustand, bei dem der Ringkragen mit dem Ringteller in direktem physischen Kontakt steht, in einem definierten Ausmass komprimiert wird. In die geschlossene Position wird das Verschlussglied durch eine Feder gedrückt.

Die WO 2009/031994 A1 (Hoeptner, Herbert W., III) offenbart ein Absperrventil mit Rückflusskontrolle, welche durch den Einlass von Umgebungsluft erreicht wird, Der nichtmetallische Stopfen enthält am Rand eine lippenförmige Erweiterung; in geschlossenem Ventilzustand wird der Stopfen auf den Ventilsitz gedrückt während die Lippe auf einer Auflagefläche zu liegen kommt. Die Anordnung von Stopfen und Lippe ist so konstruiert, dass bei einer Blockade des Stopfens durch einen mit der Flüssigkeit eingebrachten und auf dem Ventilsitz liegenden Fremdkörper (Schwebepartikel) die über den Stopfen hinausragende Lippe gegenüber der Auflagefläche abdichtet. In offenem Ventilzustand und bei geringer Flussgeschwindigkeit in Vorwärtsrichtung drückt eine Feder den inneren Zylinder mit dem daran angebrachten Stopfen auf die Auflagefläche. Gleichzeitig ermöglicht eine Konstruktion von zusammenhängenden Durchgängen den Nachfluss von Umgebungsluft sowohl in Richtung des Abflusses als auch in Gegenflussrichtung an der Lippe vorbei. Bei genügend grosser Flussgeschwindigkeit hingegen wird der Zylinder in die entgegengesetzte Richtung gedrückt und verunmöglicht durch die Dichtungen den Austritt der Flüssigkeit durch die Luftzufuhrschächte.

Die DE 36 10 884 A1 (Korthaus Ernst) beschreibt eine Ventilmembran für Flüssigkeitspumpen, welche mittels einer aussenseitig an einer Wulst angebrachten Lippe die Dichtung auch bei einem auf dem Ventilsitz eingeklemmten Schwebeteilchen ermöglichen soll. Diese Lippe ist gegen die Ebene des Ventilsitzes hin abgewinkelt und schliesst mit dieser einen Winkel von 0-90° ein.

Die DE 198 33 679 (Metallwerke Neheim Goeke & Co GmbH) beschreibt ein eingangs beschriebenes Absperrventil mit integriertem Rückflussverhinderer in der Form eines Schrägsitzventils, welches ein Gehäuse und einen schräg angesetzten Schraubenstutzen, welcher zur Aufnahme eines Ventiloberteils mit einer axial verschiebbaren Ventilspindel dient, umfasst. Die Ventilspindel stützt sich dabei an einer topfförmigen Hülse ab, wobei die Ventilspindel mit einem Zapfen in die Hülse hineinragt. Des Weiteren ist im Gehäuse ein Ventilsitz angeformt, auf welchem sich ein Schliesskörper auf eine elastische Dichtung abstützt, welche als Ring mit rechteckförmigem Querschnitt ausgeformt ist. Der Schliesskörper wird dabei durch eine Feder, welche sich an der Ventilspindel abstützt, in den Ventilsitz gedrückt. Dadurch wird verhindert, dass bei einem offenen Ventil Flüssigkeit gegen die Durchflussrichtung fliessen kann. Wird das Ventil geschlossen, so presst die Hülse der Ventilspindel den Schliesskörper in den Ventilsitz. Dabei ist eine Eindrehung an der Hülse vorhanden, welche beim Schliessen den Schliesskörper umfasst und die Dichtung bis zu einem Anschlag in den Ventilsitz drückt. Dadurch werden der Schliesskörper und dessen Dichtung teilweise entlastet und gegen Beschädigungen geschützt.

Es hat sich gezeigt, dass bei den bekannten Ausführungsformen insbesondere die Ansprechempfindlichkeit oft zu wünschen übrig lässt, sowie die Rückflussverhinderung bei geringen Druckunterschieden. In den vorgenannten Beispielen wird die Ansprechempfindlichkeit im Wesentlichen durch die Beweglichkeit des Ventiltellers und die Federkraft bestimmt.

### Darstellung der Erfindung

Aufgabe der Erfindung ist es, eine dem eingangs genannten technischen Gebiet zugehörendes Ventil zu schaffen, welches auch bei kleinen Druckunterschieden den Durchfluss sicherstellt, den Rückfluss verhindert und dabei eine grosse Ansprechempfindlichkeit aufweist.

Die Lösung der Aufgabe ist durch die Merkmale des Anspruchs 1 definiert. Gemäss der Erfindung umfasst das Ventil einen Ventilteller mit einer Festkörperdichtung zur Volldichtung und einer Lippendichtung zur Verhinderung eines Rückflusses sowie einen Anschlag für den Ventilteller zur Entlastung der Festkörperdichtung.

Aufgrund des vergleichsweise geringen Querschnitts der Lippendichtung ist nur ein kleiner Druckunterschied notwendig, damit das Fluid in die gewünschte Richtung fliessen kann. Das heisst, mit Hilfe der Lippendichtung wird eine hohe Ansprechempfindlichkeit erreicht. Zudem ist die Lippendichtung leicht beweglich, so dass schon bei geringem Unterdruck das Ventil geschlossen wird. Unterdruck bedeutet in diesem Zusammenhang, dass der Druck an einem Eingang des Ventils für das Fluid, welches in die gewünschte Richtung durch das Ventil fliessen soll, kleiner ist als bei einem Ausgang des Ventils. Das heisst, das Fluid möchte in die unerwünschte Gegenrichtung fliessen. Eine komplette Absperrung des Ventils mit Hilfe der Spindel wird dann durch die Festkörperdichtung erreicht. Darunter wird eine Dichtung mit einem grösseren Querschnitt verstanden, welche derart geformt und angebracht ist, dass sie - im Gegensatz zur Lippendichtung - zum Abdichten im Wesentlichen in ihrem gesamten Bereich in ähnlicher Weise verformt wird. Durch die Festkörperdichtung wird sichergestellt, dass die Lippendichtung bei grossem Schliessdruck nicht zu sehr belastet wird. Der Anschlag, welcher direkt mit dem Ventilteller (also nicht mit einer der Dichtungen) zusammenwirkt, wiederum schützt sowohl die Festkörperdichtung als auch die Lippendichtung, so dass diese auch bei sehr hohem Schliessdruck nicht übermässig verformt und dadurch beschädigt werden.

Die erfindungsgemässe Ausbildung der Festkörper- und der Ringdichtung sowie des Anschlags ist besonders in Ventilen mit integriertem Rückflussverhinderer von Vorteil, sie lässt sich aber auch in Ventilen ohne Rückflussverhinderer, z. B. in üblichen Absperrventilen, einsetzen.

Mit Vorteil sind die Festkörperdichtung und die Lippendichtung an derselben Ringdichtung ausgeformt. Dies ermöglicht eine einfache Herstellung und Anbringung der Dichtung des Ventiltellers. Insbesondere ist es möglich, in einem Arbeitsschritt die Festkörperdichtung und die Lippendichtung am Ventilteller anzuformen bzw. als einstückiges Element an einer vorgesehenen Stelle auf dem Ventilteller anzubringen.

Alternativ können die Lippendichtung und die Festkörperdichtung als einzelne Elemente ausgebildet sein und können dann einzeln am Ventilteller angeformt oder angebracht werden.

Mit Vorteil ist die Ringdichtung zwischen der Lippendichtung und der Festkörperdichtung verjüngt. Dadurch wird eine optimale Kraftverteilung in der Ringdichtung möglich, wobei der Lippendichtung eine ausreichende Beweglichkeit zukommt. Durch diese Geometrie können auch Druckspitzen vermieden werden, welche zu einer Beschädigung der Ringdichtung oder zu einer Beeinträchtigung von deren Funktion führen könnten.

Alternativ kann auf eine Verjüngung verzichtet werden.

Mit Vorteil sind die Festkörperdichtung radial innen und die Lippendichtung radial aussen angeformt. Dies hat den Vorteil, dass bei grossem Druckunterschied in Fliessrichtung die Lippendichtung nicht unnötig belastet wird. Zudem kann genügend Freiraum für Bewegungen der Lippendichtung ausgespart werden, womit ein kompakter Aufbau ermöglicht wird.

Alternativ können die Festkörperdichtung auch radial aussen und die Lippendichtung radial innen angeformt werden.

In einer bevorzugten Ausführungsform sind die Festkörperdichtung und die Lippendichtung derart ausgeformt, dass bei der Volldichtung die Festkörperdichtung auf die Lippendichtung drückt. Dies hat den Vorteil, dass insbesondere bei kleinen Ausführungsformen, bei denen nicht viel Raum für die Dichtung zur Verfügung steht, die Festkörperdichtung nahe an der Lippe der Lippendichtung angeformt werden kann. Beim vollständigen Schliessen des Ventils drückt dann die Festkörperdichtung die Lippendichtung in den Ventilsitz, womit eine Volldichtung erreicht wird.

Bei einer anderen bevorzugten Ausführungsform sind die Festkörperdichtung und die Lippendichtung beabstandet angeformt, so dass bei der Volldichtung die Festkörperdichtung direkt in den Ventilsitz gepresst wird.

Mit Vorteil umfasst die Festkörperdichtung der Ringdichtung einen im Querschnitt im Wesentlichen halbkreisförmigen Bereich. Besonders wenn die Festkörperdichtung mit einer abgerundeten Kante des Ventilsitzes zusammenwirkt, hat diese Formgebung den Vorteil einer optimalen Kraft- bzw. Druckverteilung bei Volldichtung. Diese Verteilung ergibt sich durch eine Verformung der aufgrund der Schliesskräfte in den Ventilsitz gepressten Festkörperdichtung.

Alternativ sind auch andere Querschnitte der Festkörperdichtung möglich, insbesondere mit rechteckförmigem Bereich.

Mit Vorteil umfasst bei der Ringdichtung die Lippendichtung einen im Querschnitt langgestreckten Bereich, dessen freies Ende im unbelasteten Zustand einen Winkel von 40°-60° mit einer Symmetrieachse der Ringdichtung einschliesst. Durch die Wahl des Winkels kann die Ansprechempfindlichkeit der Lippendichtung eingestellt werden. Dabei ist zu beachten, dass bei einem zu kleinem Winkel, das heisst der langgestreckte Bereich ist nahezu parallel zur Symmetrieachse der Ringdichtung, die Verformung der Lippendichtung vergrössert wird. Bei einem zu grossen Winkel besteht die Gefahr, dass bei kleinen Druckunterschieden die Lippendichtung nicht rechtzeitig schliesst, um einen Rückfluss zu verhindern. Die Wahl des Winkels im Bereich von 40° bis 60° ermöglicht gleichzeitig eine hohe Ansprechempfindlichkeit und ein rasches Schliessen.

Alternativ sind auch Winkel für den langgestreckten Bereich der Lippendichtung möglich, die ausserhalb des angegeben Bereichs von 40° bis 60° liegen.

Mit Vorteil schliesst der langgestreckte Bereich der Lippendichtung an den halbkreisförmigen Bereich der Festkörperdichtung an. Dadurch ist ein kompakter Aufbau möglich, wobei der halbkreisförmige Bereich der Festkörperdichtung sowohl radial ausserhalb als auch innerhalb des langgestreckten Bereichs der Lippendichtung angeordnet werden kann. Insbesondere ist es dadurch möglich, die Festkörperdichtung und die Lippendichtung in derselben Ringdichtung anzuordnen.

Alternativ können die Lippendichtung und die Festkörperdichtung beabstandet angeordnet werden.

Mit Vorteil schliesst an den langgestreckten Bereich der Lippendichtung radial aussen ein Hohlraum an, welcher bei geschlossenem Ventil den langgestreckten Bereich der Lippendichtung berührungsfrei aufnimmt. Der Hohlraum kann sowohl im Ventilteller als auch im Ventilsitz ausgespart sein, insbesondere kann er auch durch die Formgebung der Ringdichtung bereitgestellt werden. Beim Schliessen des Ventils bis zum Anschlag kann der langgestreckte Bereich der Lippendichtung aufgrund des Hohlraums so verformt werden, dass dieser in den Hohlraum hinein gebogen wird. Bei genügend grossem Hohlraum liegt der langgestreckte Bereich der Lippendichtung auch beim komplett verschlossenen Ventil nur auf dem Ventilsitz auf, ohne zwischen der Rückseite des Hohlraums und dem Ventilsitz verpresst zu werden. Dadurch wird die Belastung der Lippendichtung derart beschränkt, dass keine Beschädigung derselben erfolgen kann.

Alternativ kann auf einen solchen Hohlraum verzichtet werden. Dabei wird der langgestreckte Bereich der Lippendichtung bei der Volldichtung zusätzlich in den Ventilsitz gepresst.

Mit Vorteil ist eine axiale Ausdehnung des langgestreckten Bereichs der Lippendichtung in Schliessrichtung des Ventils grösser als eine axiale Ausdehnung des halbkreisförmigen Bereichs der Festkörperdichtung. Indem eine genügend grosse axiale Ausdehnung gewählt wird, erhält man den Vorteil, dass auch bei einfach ausgeformtem Ventilsitz eine klare Unterscheidung zwischen den Ventilzuständen offen, Rückflussverhinderung und Volldichtung möglich ist. Bei geöffnetem Ventil kann nur die Lippendichtung in Kontakt mit dem Ventilteller kommen. Erst wenn das Ventil durch Betätigung der Spindel geschlossen wird, gelangt die Festkörperdichtung in eine axiale Position, in welcher sie mit dem Ventilsitz zusammenwirkt. Dadurch kann sowohl die Ansprechempfindlichkeit erhöht werden als auch das rasche Schliessen bei geringem Unterdruck verbessert werden.

Alternativ kann die axiale Ausdehnung des langgestreckten Bereichs der Lippendichtung in Schliessrichtung des Ventils gleich der axialen Ausdehnung des halbkreisförmigen Bereichs der Festkörperdichtung sein. Dabei kann der Ventilsitz derart geformt sein, dass beim Schliessen des Ventils die Lippendichtung vor der Festkörperdichtung mit dem Ventilsitz in Kontakt kommt.

Mit Vorteil ist eine Aussparung im Ventilteller zur Aufnahme der Festkörperdichtung und der Lippendichtung im Querschnitt in einem Bereich trapezförmig, nach innen verjüngt. Damit die Lippendichtung und die Festkörperdichtung fest in der Aussparung verankert werden können, so dass keine Delamination stattfinden kann, ist es notwendig, dass vor dem Anbringen der Lippen- und der Festkörperdichtung Verschmutzungen, insbesondere Fett- oder Ölrückstände, komplett aus der Aussparung entfernt werden. Indem die Aussparung verjüngt ist, erhält man den Vorteil, dass sich die Verschmutzungen leichter entfernen lassen. Insbesondere bei mechanischer Entfernung der Verschmutzungen, zum Beispiel mittels Sandstrahlen, entstehen dank der Verjüngung keine "Schatten". Das heisst, alle Bereiche der Aussparung sind durch den Sandstrahl gut erreichbar.

Alternativ kann auf die Verjüngung der Aussparung verzichtet werden, insbesondere dann wenn die Entfernung der Verschmutzung chemisch erfolgt. Es ist ebenfalls vorstellbar, dass die Aussparung nach innen aufgeweitet wird, wodurch die Lippen- bzw. Festkörperdichtung formschlüssig im Ventilteller gehalten werden kann.

Mit Vorteil beträgt die maximale Dehnung der Festkörperdichtung bei einem vollständig geschlossenen Ventil weniger als 60%. Die maximale Dehnung ist ein Mass für die Verformung der Festkörperdichtung bei maximaler Belastung. Unter Dehnung wird die Vergleichsdehnung nach der Gestaltänderungsenergie-Hypothese nach von Mises verstanden. Der Wert von 60% für die maximale Dehnung bezieht sich auf die wahre Dehnung, welche sich auf den verformten Zustand bezieht.

Ist die maximale Dehnung zu gross, so werden die Lippen- und die Festkörperdichtung beim festen Verschliessen des Ventils zu stark belastet, wodurch deren Langlebigkeit stark vermindert wird. Aus Versuchen hat es sich gezeigt, dass bei einer maximalen Dehnung von 60% oder kleiner die Belastung der Lippen- und der Festkörperdichtung tolerierbar ist.

Beim festen Verschliessen des Ventils kontaktiert der Anschlag den Ventilsitz, wodurch sichergestellt wird, dass die Festkörperdichtung und die Lippendichtung keine weitere Belastung erfahren. Dabei trifft beim Anschlag Metall auf Metall. Wird die maximale Dehnung zu klein gewählt, so schlägt der Ventilteller beim Schliessen zu hart auf den Ventilsitz auf, was als metallisches Klopfen hörbar ist. Dieses metallische Geräusch wird von einem Anwender als störend empfunden. Daher ist es von Vorteil, wenn die maximale Dehnung mindestens 40% beträgt.

Alternativ kann die maximale Dehnung, je nach Material der Lippen- bzw. Festkörperdichtung, auch mehr als 60% betragen. Die maximale Dehnung kann auch weniger als 40% betragen, insbesondere wenn der Ventilteller und der Ventilsitz anstatt aus Metall zum Beispiel aus Kunststoff bestehen bzw. mit einer Kunststoffschicht überzogen sind. Dadurch wird das metallische Klopfen vermieden.

Mit Vorteil sind die Festkörperdichtung und die Lippendichtung in den Ventilteller einvulkanisiert. Dies hat den Vorteil, dass die Lippendichtung und die Festkörperdichtung in einem Arbeitsschritt am Ventilteller angebracht werden können. Dadurch können sowohl Verfahrenskosten gesenkt als auch die Fehleranfälligkeit bei der Montage verringert werden.

Alternativ können Lippendichtung und/oder die Festkörperdichtung vorgängig angefertigt werden und danach in die Aussparung eingesetzt werden, wobei diese z. B. eingeklebt werden.

Mit Vorteil wird der Anschlag für den Ventilteller zur Entlastung der Festkörperdichtung durch einen Aussenrand des Ventiltellers, welcher mit einer Aufschlagsfläche des Ventilsitzes zusammenwirkt, gebildet. Dies ermöglicht eine einfache Formung des Ventiltellers, welche bei der Herstellung des Ventiltellers kostengünstig vorgenommen werden kann. Zudem ergibt sich der Vorteil, dass beim festen Schliessen des Ventils eine zusätzliche Dichtung zwischen Anschlag und Aufschlagsfläche gebildet wird, die ebenfalls den Druck auf die Festkörperdichtung verringert.

Alternativ kann der Anschlag zum Beispiel als Nocken am Ventilteller zum Zusammenwirken mit einer entsprechenden Aufschlagsfläche eines Ventilgehäuses ausgebildet sein, wodurch die Spindel des Ventils gehindert wird, den Ventilteller stärker in den Ventilsitz zu pressen.

Mit Vorteil ist die Festkörperdichtung und/oder die Lippendichtung aus einem Kautschukmaterial, insbesondere Ethylen-Propylen-Dien-Kautschuk (EPDM) oder hydrierter Acryl-nitril-Butadien-Kautschuk (NBR), gefertigt und besitzt eine Härte von 30 - 95 Shore A, bevorzugt 70 - 90 Shore A, besonders bevorzugt 75-85 Shore A. In Versuchen haben Gummimischungen für Festkörperdichtungen und/oder Lippendichtungen aus Kautschukmaterial sehr gute Dichtungseigenschaften gezeigt. Zudem haben Vergleichsversuche gezeigt, dass härtere Gummimischungen sowohl bezüglich der Dichtungseigenschaft als auch bezüglich der Langlebigkeit der Festkörper- und/oder der Lippendichtungen zu bevorzugen sind. Üblich für Formdichtungen sind Gummimischungen mit einer Härte von 70 Shore A. Versuche haben aber gezeigt, dass Gummimischungen mit einer Härte bis zu 90 Shore A, insbesondere im Bereich von 75 Shore A bis 85 Shore A verbesserte Eigenschaften zeigen.

Alternativ können andere Materialien, zum Beispiel auf Silikon-Basis, für die Festkörperdichtung bzw. die Lippendichtung verwendet werden.

Mit Vorteil besteht der Ventilteller aus einer Kupferlegierung mit einem Anteil von mehr als 80 Gew.-% Cu, welche zudem Si und Zn als Legierungskomponenten enthält. Eine solche Legierung wird zum Beispiel in der EP 2 014 964 (R. Nussbaum AG) beschrieben. Mit Hilfe der erwähnten Legierung ist es möglich, den Ventilteller im Warmpressverfahren herzustellen. Insbesondere kann mit diesem Verfahren der Anschlag am Aussenrand des Ventiltellers in einfacher Weise hergestellt werden.

Alternativ kann der Ventilteller auch aus Edelstahl oder Rotguss gefertigt werden. Zudem ist es möglich, einen Kern des Ventiltellers aus Kunststoff herzustellen. Dafür besonders geeignet sind die technischen Kunststoffe PPSU, PPA, PVDF, PSU und PPS. Einsetzbar sind aber auch andere Kunststoffe, insbesondere Thermoplaste. Die Kunststoffe können dabei mit langfasrigen oder kurzfasrigen Glasfasern oder anderen Fasermaterialien verstärkt sein.

Mit Vorteil weist der Ventilteller auf einer an eine Spindel anschliessenden, dem Ventilsitz zugewandten Seite einen Einstich auf, welcher eine Spindeldichtung enthält, die einen Bereich umfasst, welcher im unbelasteten Zustand auf der dem Ventilsitz zugewandten Seite über den Einstich hervorsteht. In der Regel ist der Ventilteller an der Spindel angebracht, indem die Spindel durch eine Öffnung im Zentrum des Ventils geführt und auf der dem Ventilsitz zugewanden Seite mittels einer Befestigungsvorrichtung, zum Beispiel einer Schraube, befestigt wird.

Aus dem Stand der Technik ist bekannt, dass zur Abdichtung des Ventiltellers gegenüber der Spindel in der Öffnung ein O-Ring in eine Nut eingesetzt wird. Die Montage einer solchen Ausführungsform ist aber problematisch, da beim Einsetzen der Spindel der O-Ring beschädigt werden kann.

Indem die Spindeldichtung in einem Einstich am Ventilteller angebracht wird, kann die Spindeldichtung zusammen mit der Lippen- bzw. Festkörperdichtung im gleichen Verfahren einvulkanisiert werden. Dies hat eine Vereinfachung der Herstellung und der Montage des Ventils zur Folge. Indem die Spindeldichtung im unbelasteten Zustand auf der dem Ventilsitz zugewandten Seite über den Einstich hervorsteht, wird die Spindeldichtung bei der Montage des Ventiltellers an die Spindel durch die Befestigungsvorrichtung zusammengepresst. Dadurch wird der Ventilteller zugleich verdrehgesichert an der Spindel angebracht.

Die beschriebene Spindeldichtung und deren Anbringung können in vorteilhafter Weise auch bei Ventiltellern eingesetzt werden, die ansonsten nicht der erfindungsgemässen Konstruktion entsprechen, also insbesondere keine Lippendichtung und/oder keinen Anschlag aufweisen.

Alternativ kann die Spindeldichtung wie bisher nach dem Stand der Technik mittels eines O-Rings, welcher in der Nut in der Öffnung gelagert ist, bewirkt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: einen Aufbau eines erfindungsgemässen Ventils mit Rückflussverhinderer;
- Fig. 1b: einen Querschnitt durch den Ventilsitz und den Ventilteller mit Dichtung gemäss einer ersten Ausführungsform;
- Fig. 2a: eine Detaildarstellung der Festkörperdichtung, der Lippendichtung und des Anschlags der ersten Ausführungsform im offenen Zustand;
- Fig. 2b: eine Detaildarstellung der ersten Ausführungsform im Zustand der Rückflussverhinderung;
- Fig. 2c: eine Detaildarstellung der ersten Ausführungsform im Zustand der Volldichtung;
- Fig. 2d: eine Detaildarstellung der ersten Ausführungsform im Zustand der Volldichtung, wobei der Anschlag den Ventilsitz berührt;
- Fig. 3a: eine Detaildarstellung einer zweiten Ausführungsform einer Festkörperdichtung und Lippendichtung mit Anschlag im offenen Zustand;
- Fig. 3b: eine Detaildarstellung einer zweiten Ausführungsform im Zustand der Rückflussverhinderung; und
- Fig. 3c: eine Detaildarstellung einer zweiten Ausführungsform im Zustand der Volldichtung, wobei der Anschlag den Ventilsitz berührt.

Grundsätzlich sind in den Figuren gleiche Teile mit gleichen Bezugszeichen versehen.

### Wege zur Ausführung der Erfindung

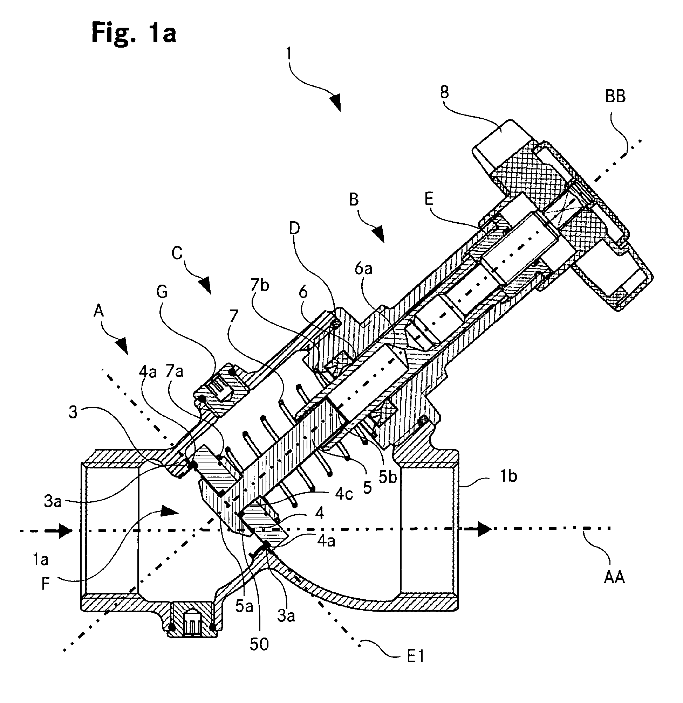

Die Figur 1a zeigt einen Schnitt durch ein Ventil mit einem Rückflussverhinderer, welches als ein Schrägsitzventil 1 ausgestaltet ist. Das Schrägsitzventil umfasst ein Armaturengehäuse A und ein darin eingesetztes Ventiloberteil B.

Das Armaturengehäuse A weist zwei Leitungsanschlüsse 1a, 1 b auf, welche diametral, also entlang einer gemeinsamen Achse, angeordnet sind. Zwischen den Leitungsanschlüssen 1a, 1 b zweigt seitlich in einem Winkel von 45° ein mittlerer Abschnitt C ab, dessen freies Ende eine Aufnahme D für das Ventiloberteil B bildet. Dazu weist er unter anderem in seinem äusseren Bereich ein Innengewinde E auf. Fluchtend mit der Achse des Ventiloberteils ist innerhalb des Armaturengehäuses A ein kreisförmiger Fluiddurchlass F ausgespart, dessen Rand als Ventilsitz 3 ausgebildet ist. Der Ventilsitz 3 verläuft in einer ersten Ebene E1, welche gegenüber einer Rohrachse AA einen Winkel von circa 45° einschliesst. Ein Ansatz G für einen zusätzlichen Stutzen, z. B. für einen Entleerstutzen, ist seitlich am mittleren Abschnitt C vorbereitet.

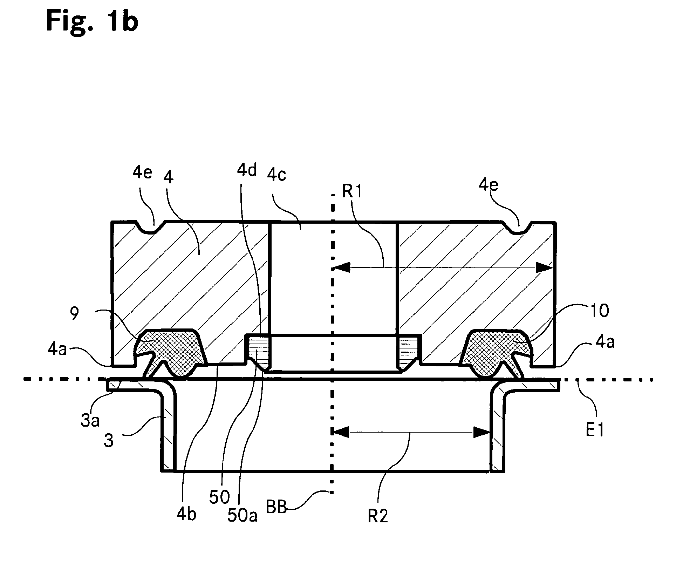

Das Ventiloberteil B ist in die Aufnahme D des Armaturengehäuses A eingeschraubt. Mit Hilfe eines kreisförmigen Ventiltellers 4, welcher co-zentrisch zum Ventilsitz 3 angeordnet ist, kann der vom Ventilsitz 3 umgebene Fluiddurchlass F verschlossen werden, wobei ein Radius R1 des Ventiltellers 4 grösser ist als ein Radius R2 des Ventilsitzes 3 (siehe Figur 1b). Dabei wirkt der Ventilteller 4 mit seiner Auflagefläche 4a auf der dem Ventilsitz 3 zugewandten Unterseite 4b mit einer Aufschlagsfläche 3a des Ventilsitzes 3 zusammen.

Zur Abdichtung umfasst der Ventilteller 4 in der Auflagefläche 4a eine Dichtung 9, wobei die Symmetrieachse der Dichtung 9 mit einer Symmetrieachse BB der Spindel 5 zusammenfällt.

Der Ventilteller 4 ist an der Spindel 5 des Ventiloberteils B angebracht, wobei ein erstes, im Querschnitt T-förmiges Ende 5a der Spindel 5 durch die Öffnung 4c im Zentrum des Ventiltellers 4 hindurch ragt und als Befestigung des Ventiltellers 4 dient. Die Spindelachse BB der Spindel 5 steht senkrecht auf die erste Ebene E1 des Ventilsitzes 3 und schliesst zur Rohrachse AA ebenfalls einen Winkel von 45° ein. Die Spindel 5 wird in einer Führungsbuchse 6 geführt, wobei die Spindel 5 entlang der Spindelachse BB in der Führungsbuchse 6 bis zu einem Anschlag 6a in der Mitte der Führungsbuchse 6 frei bewegbar ist. Eine Druckfeder 7, welche die Spindel 5 umschliesst und sich an einem ersten Ende 7a auf der Rückseite des Ventiltellers 4 und an einem zweiten Ende 7b auf der Stirnseite des Ventiloberteils B abstützt, drückt den Ventilteller 4 zusammen mit der Spindel 5 in Richtung des Ventilsitzes 3. Die Führungsbuchse 6 wiederum kann mit der Hilfe eines Stellrades 8 in an sich bekannter Weise entlang der Spindelachse BB verschoben werden.

Der Ventilteller ist aus einer Kupferlegierung hergestellt, welche aus 86.3% Kupfer, 3.0% Silizium, 10% Zink und 0.5% Mangan besteht, wobei unvermeidbare Verunreinigungen mit einem Anteil von 0.2% vorliegen. Das Armaturengehäuse A zusammen mit dem Ventilsitz ist aus Rotguss angefertigt.

In geöffneter Stellung fliesst ein Fluid vom ersten Ende 1a des Schrägsitzventils 1 in Richtung zweites Ende 1b. Aufgrund eines Überdruckes im Fluid auf der Seite des ersten Endes 1 a des Schrägsitzventils 1 wird der Ventilteller 4 angehoben und das Fluid kann in Richtung des zweiten Endes 1b fliessen. Ist kein Überdruck im Fluid vorhanden bzw. herrscht ein Unterdruck, das heisst der Druck im Fluid auf der Seite des zweiten Endes 1 b ist grösser als auf der Seite des ersten Endes 1 a, wird der Ventilteller 4 aufgrund der Feder 7 und des Unterdrucks in den Ventilsitz 3 gepresst und ein Rückfluss des Fluids in die entgegengesetzte Richtung wird verhindert.

Bei geschlossener Stellung ist die Führungsbuchse 6 mittels des Stellrades 8 entlang der Spindelachse in Richtung Ventilsitz 3 verschoben. Dabei wird die Spindel 5 am der Verbreiterung 5a gegenüberliegendem Ende 5b vom Anschlag 6a der Führungsbuchse 6 derart erfasst, dass dadurch der Ventilteller 4 auch ohne Unterstützung der Feder 7 gegen den Ventilsitz 3 gepresst wird. Damit ist ein Durchfluss des Fluids in beide Richtungen verhindert.

Die Figur 1b zeigt einen entlang der Achse BB verlaufenden Querschnitt durch den Ventilteller 4 und den Ventilsitz 3. An der Unterseite 4b des Ventiltellers 4, direkt an der Öffnung 4c für die Spindel 5 anschliessend, befindet sich ein Einstich 4d, welcher zur Aufnahme einer Spindeldichtung 50 dient. Die Spindel 5 ist in der Figur 1b nicht dargestellt. Die Spindeldichtung 50 umfasst einen langgestreckten, nach unten in Richtung des Ventilsitzes 3 geformten Bereich 50a entlang des Innenmantels. Der langgestreckte Bereich 50a ragt dabei über die Unterseite 4b des Ventiltellers 4 hinaus. Dadurch wird bei der Montage der Spindel 5 die Spindeldichtung 50 durch die Verbreiterung 5a der Spindel 5 komprimiert, wodurch die Spindel 5 gegenüber dem Ventilteller abgedichtet wird.

Des Weiteren befindet sich auf einer der Unterseite 4b gegenüberliegenden Oberseite distanziert von der Öffnung 4c für die Spindel 5 ein zweiter, ringförmiger Einstich 4e im Ventilteller 4, welcher zur Aufnahme einer an sich bekannten Rückdichtung dient, welche hier nicht genauer erläutert wird.

Es folgt nun eine Detaildarstellung der erfindungsgemässen Dichtung 9.

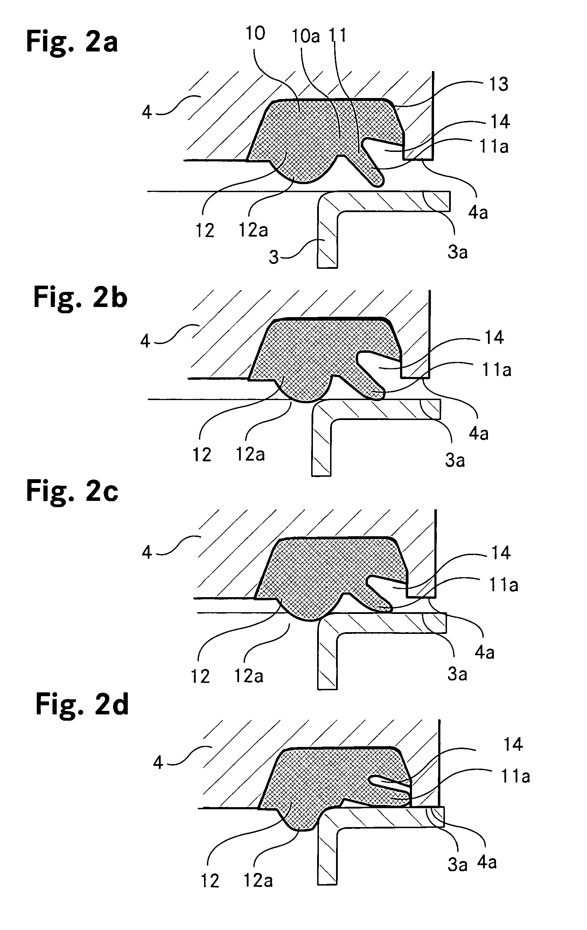

Die Figuren 2a bis 2d zeigen eine Detaildarstellung der Festkörperdichtung, der Lippendichtung und des Anschlags der ersten Ausführungsform, wobei die Dichtung 9 des Ventiltellers 4 in unterschiedlichen Zuständen des Schrägsitzventils 1 dargestellt ist.

Die Dichtung 9 ist als eine einstückige Ringdichtung 10 mit Lippendichtung 11 und Festkörperdichtung 12 ausgeformt, wobei zwischen der Festkörperdichtung 12 und der Lippendichtung 1 1 die Ringdichtung 10 eine Verjüngung 10a aufweist. Die Ringdichtung 10 wurde aus einer Gummimischung aus Ethylen-Propylen-Dien-Kautschuk (EPDM) der Härte 85 Shore A vorgeformt und in eine Aussparung 13 im Ventilteller 4 einvulkanisiert. Die Aussparung 13 ist ringförmig und ist im Querschnitt im Wesentlichen trapezförmig mit sich nach innen verkleinernder Breite. Die radial äussere Begrenzungswand ist in einem an die Stirnfläche angrenzenden Abschnitt zunächst senkrecht zu dieser und geht erst anschliessend in einen zulaufenden Abschnitt über. Die Form der Aussparung 13 ermöglicht eine zuverlässige Säuberung derselben vor dem Einbringen der Ringdichtung: Damit beim Einvulkanisieren eine gute Haftung zwischen der Ringdichtung 10 und dem Ventilteller 4 entsteht und eine Delamination verhindert wird, muss die Aussparung 13 von jeglicher Verschmutzung, insbesondere von Öl- und Fettrückständen, gesäubert werden. Dazu wird die Aussparung 13 mittels Sandstrahlen gereinigt. Da die Aussparung 13 nach innen hin verjüngt ist, sind alle Bereiche der Aussparung 13 vom Sandstrahl gut erreichbar.

Die Lippendichtung 11 umfasst einen langgestreckten Bereich 11a, dessen freies Ende im unbelasteten Zustand (Figur 2a) einen Winkel von 40° mit der Symmetrieachse BB der Spindel 5 einschliesst und nach aussen hin in Richtung Ventilsitz 3 orientiert ist. Die Festkörperdichtung 12 umfasst einen im Querschnitt im Wesentlichen halbkreisförmigen Bereich 12a und ist in einer ersten Ausführungsvariante der Ringdichtung 10 radial zwischen der Lippendichtung 11 und der Spindelachse BB angeordnet. Im unbelasteten Zustand erstreckt sich die Lippendichtung 11 in axialer Richtung über die axiale Ausdehnung der Festkörperdichtung 12 hinaus.

Ist im Fluid kein Druckunterschied zwischen Ein- und Auslass vorhanden, so wird der Ventilteller 4 aufgrund der Feder 7 (in den Figuren 2a bis 2d nicht sichtbar) leicht gegen den Ventilsitz 3 gedrückt. Dabei berührt die Lippendichtung 11 den Ventilsitz 3, wobei zwischen der Festkörperdichtung 12 und dem Ventilsitz 3 noch kein Kontakt besteht (Fig. 2b). Auch schon bei kleinem Überdruck löst sich der Kontakt der Lippendichtung 11 vom Ventilsitz 3 und das Fluid kann in die gewünschte Richtung fliessen. Somit ist eine hohe Ansprechempfindlichkeit gewährleistet. Bei zunehmendem Druckunterschied wird die Lippendichtung stärker verformt und anschliessend der Ventilteller 4 gegen die Kraft der Feder 7 axial nach hinten gedrückt. Ist aber ein Unterdruck vorhanden, so bleibt der Durchfluss in die Gegenrichtung aufgrund der Lippendichtung 11 versperrt.

Bei zunehmendem Unterdruck bzw. beim Schliessen des Ventils mittels des Stellrades 8 (Figur 2c) wird der Ventilteller 4 noch stärker in den Ventilsitz 3 gepresst, so dass der halbkreisförmige Bereich 12a der Festkörperdichtung 12 ebenfalls mit dem Ventilsitz 3 zusammenwirkt, wodurch die Dichtwirkung verstärkt wird. Zugleich wird der langgestreckte Bereich 11a der Lippendichtung 11 nach oben hin zurückgebogen, wobei dieser von einem darüberliegenden Hohlraum 14 aufgenommen wird, welcher durch einen Teil der Aussparung 13 gebildet wird, der im unbelasteten Zustand nicht von der Gummimischung der Ringdichtung 10 ausgefüllt wurde.

Bei sehr hohem Unterdruck bzw. beim vollständigen Schliessen des Ventils (Figur 2d) wird der Ventilteller 4 in den Ventilsitz 4 gepresst, so dass ein Anschlag 4a an einem Aussenrand des Ventiltellers 4 mit einer Aufschlagsfläche 3a des Ventilsitzes 3 in Kontakt kommt. Dabei wird die Festkörperdichtung 12 bis auf eine maximale Dehnung von 60% zusammengedrückt. Die Lippendichtung 11 wird weiter nach oben gebogen und wird vollständig vom Hohlraum 13 aufgenommen, wobei der Hohlraum 13 genügend gross ist, so dass der langgestreckte Bereich 11 a mit der Ringdichtung 10 nicht in Kontakt kommt. Aufgrund der Abstützung der Anschlagfläche 4a am Ventilsitz 3 wird eine Überbelastung der Festkörperdichtung 12 und der Lippendichtung 11 vermieden.

Ein typischer Durchmesser eines Ventiltellers 4 für ein 2-Zoll Rohrsystem beträgt 56.7mm. Die Aussparung für die Ringdichtung 10 gemäss der ersten Ausführungsvariante, hat dabei eine ungefähre Breite von 4.9mm, welche sich auf eine Breite von 2.59mm verjüngt. Die Tiefe der Aussparung 13 beträgt 1.8mm. Der langgestreckte Bereich 1a der Lippendichtung 11 weist dabei typischerweise eine Dicke von 0.5mm auf. Der halbkreisförmige Bereich 12a der Festkörperdichtung 12 hat einen Radius von typischerweise 1.2mm.

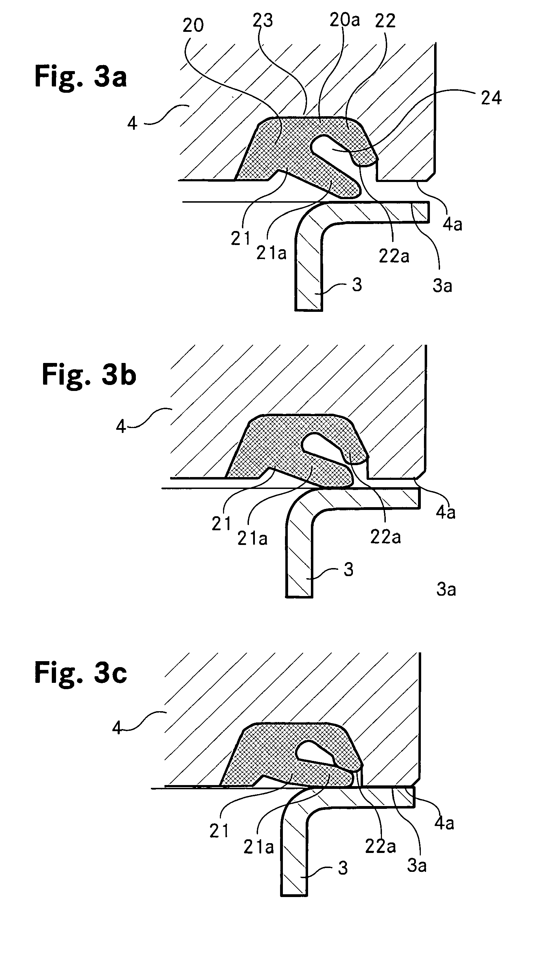

Die Figuren 3a bis 3c zeigen eine zweite Variante einer Ringdichtung 20, welche in einer Aussparung 23 des Ventiltellers 4 angeordnet ist. Diese ebenfalls einstückige Ausführungsform der Ringdichtung 20 umfasst eine radial innen angeordnete Lippendichtung 21. Wie bei der ersten Ringdichtung 10 kontaktiert bei fehlendem Druckunterschied im Fluid ein langgestreckter Bereich 21a der Lippendichtung 21 den Ventilsitz 4. Radial aussen schliessen an die Lippendichtung 21 eine Verjüngung 20a und dann die Festkörperdichtung 22 an. Die Festkörperdichtung 22 liegt bei eingebrachter Ringdichtung 20 an der radialen Aussenwand der Aussparung 23 an, sie liegt in axialer Richtung hinter dem langgestreckten Bereich 21a der Lippendichtung 21 und erstreckt sich im Wesentlichen über die gesamte Breite dieses Bereichs. Das freie Ende der Festkörperdichtung 22 liegt ungefähr auf der Höhe des Übergangs zwischen dem an die Stirnfläche angrenzenden und dazu senkrecht verlaufenden Abschnitt und dem zulaufenden Abschnitt, wobei das freie Ende im Querschnitt eine ungefähr halbrunde Form aufweist.

Wird bei Unterdruck bzw. bei leichtem Schliessen des Ventils der Ventilteller 4 stärker gegen den Ventilsitz 3 gedrückt (Figur 3b), so biegt sich der langgestreckte Bereich 21a nach oben in Richtung des Hohlraumes 24. Dabei kontaktiert ein halbkreisförmiger Bereich 22a der Festkörperdichtung 22 den langgestreckten Bereich 21a und drückt diesen zusätzlich auf den Ventilsitz 3, wodurch die Dichtwirkung verstärkt wird.

Bei geschlossenem Ventil, bzw. bei sehr hohem Unterdruck kontaktiert der Anschlag 4a des Ventiltellers 4 die Aufschlagsfläche 3a des Ventilsitzes 3, und die Festkörperdichtung 22 drückt die Lippendichtung 21 bis zu einer maximalen Dehnung von 60% auf den Ventilsitz 3. Aufgrund des Anschlages 4a wird auch in dieser Ausführungsform verhindert, dass die Ringdichtung 20 bzw. die Festkörperdichtung 22 und die Lippendichtung 21 zu stark komprimiert und dadurch beschädigt werden.

Ein typischer Durchmesser eines Ventiltellers 4 für ein 1-Zoll Rohrsystem beträgt 30.2mm. Die Aussparung für die Ringdichtung 20 gemäss der zweiten Ausführungsvariante weist dabei eine ungefähre Breite von 3mm, welche sich dann auf 2.1 mm verjüngt. Die Tiefe der Aussparung 4a beträgt 1.5mm. Der langgestreckte Bereich 21 a der Lippendichtung 21 weist dabei typischerweise eine Dicke von 0.5mm auf. Der halbkreisförmige Bereich 22a der Festkörperdichtung 22 hat einen Radius von typischerweise 0.25mm.

Als Material für die Ringdichtungen wurde eine Gummimischung aus Ethylen-Propylen-Dien-Kautschuk (EPDM) verwendet, welche einvulkanisiert wurde. Es sind ebenso gut andere Gummimischungen denkbar, insbesondere andere Kautschukmaterialien wie hydrierter Acryl-Nitril-Butadien-Kautschuk (NBR).

Indem sowohl die Ringdichtung als auch die Spindeldichtung in eine Aussparung bzw. einen Einstich an der Unterseite des Ventiltellers einvulkanisiert werden, können beide Dichtungen in einem Arbeitsschritt hergestellt werden. Dies bedeutet eine erhebliche Vereinfachung des Herstellungsverfahrens. Zudem kann in derselben Anlage auch die Rückdichtung hergestellt werden.

Die hier dargestellte Spindeldichtung hat gegenüber der herkömmlichen Spindeldichtung mittels eines O-Rings wesentliche Vorteile. Herkömmlich wurde der O-Ring in einer Nut in der Öffnung im Ventilteller für die Spindel eingesetzt. Damit eine genügend grosse Dichtwirkung erzielt werden konnte, musste der O-Ring überdimensioniert werden. Dies bereitete Schwierigkeiten bei der Montage des Ventiltellers an die Spindel. Es bestand die Gefahr, dass der O-Ring beim Einsetzen der Spindel beschädigt wurde. Durch Verwendung von viel Gleitmittel, konnte diese Gefahr etwas reduziert werden.

Indem, wie dies in Figur 1b dargestellt wurde, die Spindeldichtung analog der Ringdichtung in einen Einstich einvulkanisiert wird, besteht bei der Montage des Ventiltellers an die Spindel keine Gefahr, dass die Spindeldichtung verletzt wird.

Die erfindungsgemässen Ventilteller können für Rohrsysteme unterschiedlicher Grösse eingesetzt werden. Besonders gut geeignet sind die erfindungsgemässen Ventile für Rohrsysteme mit Rohrdurchmesser im Bereich von 0.5 Zoll bis 4 Zoll, wobei auch grössere beziehungsweise kleinere Rohrdurchmesser denkbar sind.

Die zweite Ausführungsvariante der Figuren 3a bis 3c ist platzsparender als die erste Ausführungsvariante der Figuren 2a bis 2d. Daher ist die zweite Ausführungsvariante besonders gut geeignet für Rohrdurchmesser von 0.5 Zoll bis 1.25 Zoll. Die erste Ausführungsvariante zeigt eine etwas bessere Dichtwirkung und ihr ist somit bei Rohrdurchmessern zwischen 1.5 Zoll und 4 Zoll gegenüber der zweiten Ausführungsform der Vorzug zu geben. Selbstverständlich können sowohl die erste als auch die zweite Ausführungsformen der Dichtung mit der in der Figur 1b dargestellten Spindeldichtung und Rückdichtung kombiniert werden.

Auch wenn der erfindungsgemässe Ventilteller für Absperrventile mit Rückflussverhinderer besonders gut geeignet ist, ist es auch möglich, den beschriebenen Ventilteller anderswo einzusetzen. Insbesondere können die Ventilteller auch in Absperrventilen ohne Rückflussverhinderer oder reinen Rückflussverhinderern ohne Absperrfunktion eingesetzt werden.

In den beiden Ausführungsformen sind die Festkörperdichtung und die Lippendichtung als einstückige Ringdichtung ausgebildet. Es ist aber ebenfalls möglich, die Festkörperdichtung und die Lippendichtung als Einzelelemente anzufertigen, wobei keine Verbindung zwischen den beiden besteht.

Anstelle des Einvulkanisierens der Festkörperdichtung und der Lippendichtung können die beiden Dichtungen auch ausserhalb des Ventiltellers, zum Beispiel durch Extrudieren, hergestellt werden. Dies kann wiederum als Einzelelemente erfolgen oder zusammen als einstückige Ringdichtung. Anschliessend werden die Festkörperdichtung und die Lippendichtung bzw. die Ringdichtung in die Aussparung des Ventiltellers gelegt und zum Beispiel mittels eines Klebstoffes befestigt.

Die Verjüngung der Aussparung erfolgt in beiden Ausführungsformen beidseitig. Es ist aber auch vorstellbar, dass nur auf einer Seite der Aussparung verjüngt wird und die andere Seite rechtwinklig zur Unterseite des Ventiltellers verläuft. Allgemein können unterschiedlichste Querschnittformen der Aussparung für die Dichtung gewählt werden. Je nach Querschnittform entsteht eine unterschiedliche Belastung des Materials in der Dichtung. Die in den Ausführungsbeispielen dargestellte trapezförmige Querschnittsform, welche beidseitig eine Verjüngung aufweist, erzeugt gemäss FE-Simulationen eine bevorzugte Druckverteilung in der Dichtung, welche hohe Belastungen vermeidet.

Das Gleiche gilt auch für die Ausgestaltung der Festkörperdichtung und der Lippendichtung. Aufgrund von FE-Simulationen haben sich der halbkreisförmige Bereich der Festkörperdichtung und die Form des langgestreckten Bereichs der Lippendichtung als besonders vorteilhaft bezüglich der Druckverteilung und der Verformung der Ringdichtung erwiesen.

In der zweiten Ausführungsform befindet sich die Festkörperdichtung radial ausserhalb der Lippendichtung und drückt beim Schliessen des Ventils indirekt via die Lippendichtung auf den Ventilsitz. Es ist aber ebenfalls vorstellbar, dass die Festkörperdichtung zwar radial aussen von der Lippendichtung angeordnet ist, aber direkt auf den Ventilsitz drückt, ohne dabei die Lippendichtung zu berühren.

Der Begriff Dehnung bzw. Vergleichsdehnung wird in der Beschreibung nach der Gestaltänderungsenergie-Hypothese, kurz GEH, von Richard Edler von Mises gebraucht. Die GEH ist auch unter den Begriffen Gestaltänderungshypothese oder Mises-Vergleichsspannung bekannt. Vergleichsdehnungen sind fiktive einachsige Dehnungen, welche dieselbe Materialbeanspruchung darstellen wie ein realer, mehrachsiger Dehnungszustand. Damit kann der wirkliche dreidimensionale Belastungszustand im Bauteil, bestehend aus Normaldehnungen und Schubverzerrungen in alle drei Raumrichtungen, direkt mit den Kennwerten aus dem einachsigen Zugversuch (z.B. Reissdehnung) verglichen werden. Die in der Beschreibung angegeben und in den Ansprüchen definierten Dehnungswerte stellen sogenannte "wahre Dehnungen" dar, welche sich von den sogenannten "technischen Dehnungen" dadurch unterscheiden, dass sie sich auf den verformten Zustand und nicht auf den unverformten Ausgangszustand beziehen.

Zusammenfassend ist festzustellen, dass ein Ventil, insbesondere ein Ventil mit Rückflussverhinderer, geschaffen wurde, welches auch bei kleinen Druckunterschieden den Durchfluss sicherstellt, den Rückfluss verhindert und dabei eine grosse Ansprechempfindlichkeit aufweist.

## Patentansprüche

1. Ventil (1), insbesondere mit integriertem Rückflussverhinderer, umfassend
a) einen Ventilteller (4) mit einer Festkörperdichtung (12; 22) zur Volldichtung und einer Lippendichtung (11; 21) zur Verhinderung eines Rückflusses; sowie
b) einen Anschlag (4a) für den Ventilteller (4) zur Entlastung der Festkörperdichtung (12; 22).

2. Ventil (1) nach Anspruch 1, **dadurch gekennzeichnet, dass** die Festkörperdichtung (12; 22) und die Lippendichtung (11; 21) an derselben Ringdichtung (10; 20) ausgeformt sind.

3. Ventil (1) nach Anspruch 2, **dadurch gekennzeichnet, dass** die Ringdichtung (10; 20) zwischen der Lippendichtung (11; 21) und der Festkörperdichtung (12; 22) verjüngt ist.

4. Ventil (1) nach einem der Ansprüche 2 oder 3, **dadurch gekennzeichnet, dass** die Festkörperdichtung (12) radial innen und die Lippendichtung (11) radial aussen angeformt ist.

5. Ventil (1) nach einem der Ansprüche 2 oder 3, **dadurch gekennzeichnet, dass** die Festkörperdichtung (22) und die Lippendichtung (21) derart ausgeformt sind, dass bei der Volldichtung die Festkörperdichtung (22) auf die Lippendichtung (21) drückt.

6. Ventil (1) nach einem der Ansprüche 2 bis 5, **dadurch gekennzeichnet, dass** bei der Ringdichtung (10; 20) die Festkörperdichtung (12; 22) einen im Querschnitt im Wesentlichen halbkreisförmigen Bereich umfasst.

7. Ventil (1) nach einem der Ansprüche 2 bis 6, **dadurch gekennzeichnet, dass** bei der Ringdichtung (10; 20) die Lippendichtung (11; 21) einen im Querschnitt langgestreckten Bereich (11a; 21 a) umfasst, dessen freies Ende im unbelasteten Zustand einen Winkel von 40°-60° mit einer Symmetrieachse BB der Ringdichtung (10; 20) einschliesst.

8. Ventil (1) nach Anspruch 7, **dadurch gekennzeichnet, dass** der langgestreckte Bereich (11a; 21a) der Lippendichtung (11; 21) an den halbkreisförmigen Bereich (12a; 22) der Festkörperdichtung (12; 22) anschliesst.

9. Ventil (1) nach einem der Ansprüche 7 oder 8, **dadurch gekennzeichnet, dass** an den langgestreckten Bereich (11 a; 21 a) der Lippendichtung (11; 21) radial aussen ein Hohlraum (14; 24) anschliesst, welcher bei geschlossenem Ventil (1) den langgestreckten Bereich (11a; 21a) der Lippendichtung (11; 21) berührungsfrei aufnimmt.

10. Ventil (1) nach einem der Ansprüche 2 bis 9, **dadurch gekennzeichnet, dass** eine axiale Ausdehnung des langgestreckten Bereichs (11a; 21a) der Lippendichtung (11; 21) in Schliessrichtung des Ventils grösser ist als eine axiale Ausdehnung des halbkreisförmigen Bereichs (12a; 22a) der Festkörperdichtung (12; 22).

11. Ventil (1) nach einem der Ansprüche 1 bis 10, **dadurch gekennzeichnet, dass** eine Aussparung (13; 23) im Ventilteller zur Aufnahme der Festkörperdichtung (12; 22) und der Lippendichtung (11; 21) im Querschnitt in einem Bereich trapezförmig, nach innen verjüngt ist.

12. Ventil (1) nach einem der Ansprüche 1 bis 11, **dadurch gekennzeichnet, dass** die maximale Dehnung der Festkörperdichtung (12; 22) bei einem vollständig geschlossenen Ventil (1) weniger als 60% beträgt.

13. Ventil (1) nach einem der Ansprüche 1 bis 12, **dadurch gekennzeichnet, dass** die Festkörperdichtung (12; 22) und die Lippendichtung (11; 21) in den Ventilteller (4) einvulkanisiert sind.

14. Ventil nach einem der Ansprüche 1 bis 13, **dadurch gekennzeichnet, dass** der Anschlag (4a) für den Ventilteller 4 zur Entlastung der Festkörperdichtung (12; 22) durch einen Aussenrand des Ventiltellers (4), welcher mit einer Aufschlagsfläche (3a) eines Ventilsitzes (3) zusammenwirkt, gebildet wird.

15. Ventil (1) nach einem der Ansprüche 1 bis 14, **dadurch gekennzeichnet, dass** die Festkörperdichtung (12; 22) und/oder die Lippendichtung (11; 21) aus einem Kautschukmaterial, insbesondere Ethyl-Probylen-Dien-Kautschuk oder hydrierter Acryl-Nitril-Butadien-Kautschuk, gefertigt ist und eine Härte von 30 - 95 Shore A, bevorzugt 70-90 Shore A, besonders bevorzugt 75-85 Shore A besitzt.

16. Ventil (1) nach einem der Ansprüche 1 bis 15, **dadurch gekennzeichnet, dass** der Ventilteller (4) aus einer Kupferlegierung mit einem Anteil von mehr als 80 Gew.-% Cu besteht, welche zudem Si und Zn als Legierungskomponenten enthält.

17. Ventil (1) nach einem der Ansprüche 1 bis 16, **dadurch gekennzeichnet, dass** der Ventilteller (4) auf einer an eine Spindel (5) anschliessenden, dem Ventilsitz (3) zugewandten Seite (4b) einen Einstich (4d) aufweist, welcher eine Spindeldichtung (50) enthält, die einen Bereich (50a) umfasst, welcher im unbelasteten Zustand auf der dem Ventilsitz (3) zugewandten Seite (4b) über den Einstich (4d) hervorsteht.

## Claims

1. Valve (1), in particular with an integrated backflow preventer, comprising
a) a valve plate (4) with a solid seal (12; 22) for full sealing and a lip seal (11; 21) for preventing a backflow; and
b) a stop (4a) for the valve plate (4) for relieving the solid seal (12; 22).

2. Valve (1) according to Claim 1, **characterized in that** the solid seal (12; 22) and the lip seal (11; 21) are formed on the same annular seal (10; 20).

3. valve (1) according to Claim 2, **characterized in that** the annular seal (10; 20) is tapered between the lip seal (11; 21) and the solid seal (12; 22).

4. Valve (1) according to either of Claims 2 and 3, **characterized in that** the solid seal (12) is formed radially inwardly and the lip seal (11) is formed radially outwardly.

5. Valve (1) according to either of Claims 2 and 3, **characterized in that** the solid seal (22) and the lip seal (21) are formed in such a way that, during full sealing, the solid seal (22) presses onto the lip seal (21).

6. Valve (1) according to one of Claims 2 to 5, **characterized in that**, in the annular seal (10; 20), the solid seal (12; 22) comprises a region which is substantially semicircular in cross section.

7. Valve (1) according to one of Claims 2 to 6, **characterized in that**, in the ring seal (10; 20), the lip seal (11; 21) comprises a region (11a; 21a) which is elongate in cross section and whose free end encloses, in the unloaded state, an angle of 40°-60° with an axis of symmetry BB of the annular seal (10; 20).

8. Valve (1) according to Claim 7, **characterized in that** the elongate region (11a; 21a) of the lip seal (11; 21) adjoins the semi-circular region (12a; 22) of the solid seal (12; 22).

9. Valve (1) according to either of Claims 7 and 8, **characterized in that** the elongate region (11a; 21a) of the lip seal (11; 21) is adjoined radially outwardly by a cavity (14; 24) which, with the valve (1) closed, receives the elongate region (11a; 21a) of the lip seal (11; 21) in a contactfree manner.

10. Valve (1) according to one of Claims 2 to 9, **characterized in that** an axial extent of the elongate region (11a; 21a) of the lip seal (11; 21) in the closing direction of the valve is greater than an axial extent of the semi-circular region (12a; 22a) of the solid seal (12; 22).

11. Valve (1) according to one of Claims 1 to 10, **characterized in that** a cutout (13; 23) in the valve plate for receiving the solid seal (12; 22) and the lip seal (11; 21) is inwardly tapered trapezoidially in cross section in a region.

12. Valve (1) according to one of Claims 1 to 11, **characterized in that** the maximum elongation of the solid seal (12; 22) is less than 60% when a valve (1) is completely closed.

13. Valve (1) according to one of Claims 1 to 12, **characterized in that** the solid seal (12; 22) and the lip seal (11; 21) are vulcanized into the valve plate (4).

14. Valve according to one of Claims 1 to 13, **characterized in that** the stop (4a) for the valve plate (4) for relieving the solid seal (12; 22) is formed by an outer edge of the valve plate (4) which interacts with an impact face (3a) of a valve seat (3).

15. Valve (1) according to one of Claims 1 to 14, **characterized in that** the solid seal (12; 22) and/or the lip seal (11; 21) is produced from a rubber material, in particular ethylene-propylene-diene rubber or hydrogenated acrylonitrile-butadiene rubber, and has a Shore A Hardness of 30-95, preferably a Shore A Hardness of 70-90, particularly preferably a Shore A Hardness of 75-85.

16. Valve (1) according to one of Claims 1 to 15, **characterized in that** the valve plate (4) consists of a copper alloy having a content of more than 80% by weight of Cu which additionally contains Si and Zn as alloy components.

17. Valve (1) according to one of Claims 1 to 16, **characterized in that** the valve plate (4) has a recess (4d) on a side (4b) adjoining a spindle (5) and facing the valve seat (3), which recess contains a spindle seal (50) which comprises a region (50a) which, in the unloaded state, projects beyond the recess (4d) on the side (4b) facing the valve seat (3).

## Revendications

1. Soupape (1), en particulier pourvue d'un dispositif anti-reflux intégré, comportant
a) une tête de soupape (4) comprenant un joint d'étanchéité solide (12 ; 22) pour l'étanchéité complète et un joint d'étanchéité à lèvre (11 ; 21) pour empêcher un reflux ; ainsi que
b) une butée (4a) pour la tête de soupape (4) pour soulager le joint d'étanchéité solide (12 ; 22).

2. Soupape (1) selon la revendication 1, **caractérisée en ce que** le joint d'étanchéité solide (12 ; 22) et le joint d'étanchéité à lèvre (11 ; 21) sont formés sur le même joint d'étanchéité annulaire (10 ; 20),

3. Soupape (1) selon la revendication 2, **caractérisée en ce que** le joint d'étanchéité annulaire (10 ; 20) est aminci entre le joint d'étanchéité à lèvre (11 ; 21) et le joint d'étanchéité solide (12 ; 22).

4. Soupape (1) selon la revendication 2 ou 3, **caractérisée en ce que** le joint d'étanchéité solide (12) est formé radialement à l'intérieur et le joint d'étanchéité à lèvre (11) est formé radialement à l'extérieur.

5. Soupape (1) selon la revendication 2 ou 3, **caractérisée en ce que** le joint d'étanchéité solide (22) et le joint d'étanchéité à lèvre (21) sont formés de telle sorte que, lors de l'étanchéité complète, le joint d'étanchéité solide (22) s'appuie sur le joint d'étanchéité à lèvre (21).

6. Soupape (1) selon l'une quelconque des revendications 2 à 5, **caractérisée en ce que**, dans le cas du joint d'étanchéité annulaire (10 ; 20), le joint d'étanchéité solide (12 ; 22) comporte une région essentiellement semi-circulaire en section transversale.

7. Soupape (1) selon l'une quelconque des revendications 2 à 6, **caractérisée en ce que**, dans le cas du joint d'étanchéité annulaire (10 ; 20), le joint d'étanchéité à lèvre (11 ; 21) comporte une région allongée (11a ; 21a) en section transversale, dont l'extrémité libre forme à l'état non chargé un angle de 40 à 60° avec un axe de symétrie BB du joint d'étanchéité annulaire (10 ; 20).

8. Soupape (1) selon la revendication 7, **caractérisée en ce que** la région allongée (11a ; 21a) du joint d'étanchéité à lèvre (11 ; 21) est adjacente à la région semi-circulaire (12a ; 22) du joint d'étanchéité solide (12 ; 22).

9. Soupape (1) selon la revendication 7 ou 8, **caractérisée en ce qu'**un espace creux (14 ; 24) est adjacent radialement à l'extérieur à la région allongée (11a ; 21a) du joint d'étanchéité à lèvre (11 ; 21), lequel espace creux reçoit sans contact la région allongée (11a ; 21a) du joint d'étanchéité à lèvre (11 ; 21) lorsque la soupape (1) est fermée.

10. Soupape (1) selon l'une quelconque des revendications 2 à 9, **caractérisée en ce qu'**une étendue axiale de la région allongée (11a ; 21a) du joint d'étanchéité à lèvre (11 ; 21) dans la direction de fermeture de la soupape est plus grande qu'une étendue axiale de la région semi-circulaire (12a ; 22a) du joint d'étanchéité solide (12 ; 22).

11. Soupape (1) selon l'une quelconque des revendications 1 à 10, **caractérisée en ce qu'**un évidement (13 ; 23) dans la tête de soupape pour recevoir le joint d'étanchéité solide (12 ; 22) et le joint d'étanchéité à lèvre (11 ; 21) est aminci vers l'intérieur sous forme trapézoïdale en section transversale dans une région.

12. Soupape (1) selon l'une quelconque des revendications 1 à 11, **caractérisée en ce que** la déformation maximale du joint d'étanchéité solide (12 ; 22) vaut moins de 60 % en cas de soupape (1) complètement fermée.

13. Soupape (1) selon l'une quelconque des revendications 1 à 12, **caractérisée en ce que** le joint d'étanchéité solide (12 ; 22) et le joint d'étanchéité à lèvre (11 ; 21) sont vulcanisés dans la tête de soupape (4).

14. Soupape selon l'une quelconque des revendications 1 à 13, **caractérisée en ce que** la butée (4a) pour la tête de soupape (4) pour soulager le joint d'étanchéité solide (12 ; 22) est formée par un bord extérieur de la tête de soupape (4), lequel coopère avec une surface d'impact (3a) d'un siège de soupape (3).

15. Soupape (1) selon l'une quelconque des revendications 1 à 14, **caractérisée en ce que** le joint d'étanchéité solide (12 ; 22) et/ou le joint d'étanchéité à lèvre (11 ; 21) est/sont fabriqué(s) à partir d'un matériau de caoutchouc, en particulier de caoutchouc éthylène-propylène-diène ou de caoutchouc acrylonitrile-butadiène hydrogéné, et présente(nt) une dureté de 30 à 95 Shore A, de préférence de 70 à 90 Shore A, de manière particulièrement préférée de 75 à 85 Shore A.

16. Soupape (1) selon l'une quelconque des revendications 1 à 15, **caractérisée en ce que** la tête de soupape (4) est constituée d'un alliage de cuivre présentant une proportion de plus de 80 % en poids de Cu, lequel contient en outre Si et Zn en tant que composants d'alliage.

17. Soupape (1) selon l'une quelconque des revendications 1 à 16, **caractérisée en ce que** la tête de soupape (4) comprend, sur un côté (4b) adjacent à une tige (5) et tourné vers le siège de soupape (3), une gorge (4d) qui contient un joint d'étanchéité de tige (50) qui comporte une région (50a) qui, à l'état non chargé, fait saillie au-delà de la gorge (4d) sur le côté (4b) tourné vers le siège de soupape (3).
